(19)

Europäisches
Patentamt

European
Patent Office

Office européen
des brevets

(11) **EP 4 663 699 A1**

(12) **EUROPEAN PATENT APPLICATION**
published in accordance with Art. 153(4) EPC

(43) Date of publication:
**17.12.2025 Bulletin 2025/51**

(21) Application number: **23921151.9**

(22) Date of filing: **09.02.2023**

(51) International Patent Classification (IPC):
*C08L 23/12* (2006.01)        *C08L 23/26* (2025.01)
*H01B 9/00* (2006.01)        *C08J 7/04* (2020.01)

(52) Cooperative Patent Classification (CPC):
**C08J 7/04; C08L 23/12; C08L 23/26; H01B 9/00**

(86) International application number:
**PCT/JP2023/004433**

(87) International publication number:
**WO 2024/166320 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SUMITOMO ELECTRIC INDUSTRIES,
LTD.
Osaka-shi, Osaka 541-0041 (JP)**

(72) Inventors:
• **ONODA, Takaaki
  Osaka-shi, Osaka 541-0041 (JP)**
• **YAMASAKI, Satoshi
  Osaka-shi, Osaka 541-0041 (JP)**
• **YAMAZAKI, Takanori
  Osaka-shi, Osaka 541-0041 (JP)**
• **SAKAIDA, Hideaki
  Osaka-shi, Osaka 541-0041 (JP)**

(74) Representative: **Grünecker Patent- und
Rechtsanwälte
PartG mbB
Leopoldstraße 4
80802 München (DE)**

(54) **RESIN COMPOSITION, POWER CABLE, AND METHOD FOR PRODUCING POWER CABLE**

(57)     The resin composition includes a base polymer (A) having propylene units, and a modified polymer (B) having propylene units and modified with unsaturated carboxylic acid, wherein the total content of the unsaturated carboxylic acid derived from the modified polymer (B) is 0.0003% or more, and when the molecular weight distribution is measured, a percentage of components having a molecular weight of $1 \times 10^4$ or less is less than 1.3%, and a percentage of components having a molecular weight of $6 \times 10^5$ or more is 16% or more.

[Fig. 1]

EP 4 663 699 A1

**Description**

**[Technical Field]**

The present disclosure relates to a resin composition, a power cable, and a method of producing the power cable.

**[Background Art]**

In recent years, solid-insulated power cables (hereinafter abbreviated as "power cables") have been developed for DC power transmission applications. Crosslinked polyethylene has been widely used as a resin component constituting an insulating layer in such a power cable (e.g., PTL. 1).

**[Citation List]**

**[Patent Literature]**

PTL. 1: JP 11-086634 A (1999)

**[Summary of Invention]**

**[Solution to Problem]**

According to an aspect of the present disclosure,

there is provided a resin composition, including:

a base polymer (A) having polyolefin units; and
a modified polymer (B) having propylene units and modified with unsaturated carboxylic acid,

wherein a total content of the unsaturated carboxylic acid derived from the modified polymer (B) is 0.0003% or more; and
when the molecular weight distribution is measured, a percentage of components having a molecular weight of $1 \times 10^4$ or less is less than 1.3%, and a percentage of components having a molecular weight of $6 \times 10^5$ or more is 16% or more.

According to another aspect of the present disclosure,

there is provided power cable, including:

a conductor; and
an insulating layer covering a circumference of the conductor and formed of a resin composition,

wherein the resin composition contains

a base polymer (A) having propylene units, and
a modified polymer (B) having propylene units and modified with unsaturated carboxylic acid,

a total content of the unsaturated carboxylic acid derived from the modified polymer (B) contained in the resin composition is 0.0003% or more, and
when a molecular weight distribution of the resin composition is measured, a percentage of components having a molecular weight of $1 \times 10^4$ or less is less than 1.3%, and a percentage of components having a molecular weight of $6 \times 10^5$ or more is 16% or more.

**[Brief Description of Drawings]**

FIG. 1 is a schematic cross-sectional diagram orthogonal to an axial direction of a power cable according to an embodiment of the present disclosure.

FIG. 2 is a schematic configuration diagram of an extruder used in a method of producing a power cable according to an embodiment of the present disclosure.

FIG. 3 is a schematic diagram for explaining the shape of a screw flight.

FIG. 4 is a schematic diagram for explaining a retention suppression member.

FIG. 5 is a flow chart illustrating a method of producing a power cable according to an embodiment of the present disclosure.

**[Description of Embodiments]**

[Problem to be Solved by Disclosure]

Crosslinked polyethylene which has been degraded over time cannot be recycled and has no choice but to be incinerated. For this reason, there is concern about the influence on environment.

In recent years, a propylene unit-containing polymer component such as polypropylene has attracted attention as the resin components constituting the insulating layer. Polypropylene, even non-crosslinked one, can achieve high insulation. In other words, both insulation and recyclability can be achieved.

On the other hand, with a polymer component having propylene units, insulation cannot be stably obtained in the insulating layer in some cases.

An object of the present disclosure is to provide a technique for stably obtaining insulation in a power cable.

[Advantageous Effect of the Disclosure]

According to the present disclosure, insulation can be stably obtained in a power cable.

[Description of Embodiment of Disclosure]

<Knowledges Obtained by the Inventors>

First, an outline of the knowledges obtained by the inventors will be described.

In power cables, when an insulating layer is constituted by a polymer component having propylene units, for example, space charges are generated in the insulating layer upon application of high voltage, and therefore insulation of the insulating layer may be possibly reduced. This tendency is more pronounced in high-temperature environments. The insulation used herein means a volume resistivity, a DC breakdown electric field strength, space charge characteristics, and the like of the insulating layer.

In order to improve the insulation of the insulating layer, a method of blending a modified polymer having a polar group has been investigated. Examples of the modified polymer include modified propylene which is propylene modified with unsaturated carboxylic acid.

However, it is confirmed that simply adding modified polymers fails to stabilize the insulation of the resin composition and the insulating layer. Further investigation into this point reveals that the percentage of high molecular weight components in the resin composition tends to be low and the percentage of low molecular weight components tends to be high when the insulation is unstable.

High molecular weight components contribute to keep insulation high, while low molecular weight components may reduce insulation. It is considered that the low molecular weight components cause localized accumulation of space charges in the resin composition, and that they migrate in the resin composition, especially in high temperature environments, causing further accumulation. For this reason, even when a modified polymer is added to the resin composition, variations in percentages of the high molecular weight components and the low molecular weight components will make it difficult to obtain the space charge trapping effect by the modified polymer. As a result, high insulation cannot be stably obtained in the insulating layer in some cases.

The percentages of high molecular weight components and low molecular weight components are determined according to the types and addition ratios of polymer components and modified polymers each having a predetermined molecular weight distribution. However, it was observed that the percentage of each molecular weight component, which should have been determined at the material selection stage, may vary after extrusion in some cases.

Further investigation into this point revealed that heating of the resin composition during extrusion causes thermal decomposition of the polymer components and other components, which reduces molecular weight. As a result of this thermal decomposition, the percentage of high molecular weight components decreases and the percentage of low molecular weight components increases, causing each percentage to vary from its original value.

Moreover, it was found that this percentage variation is not significant in the early stages of extrusion, but becomes more pronounced after a long time during extrusion. In other words, the longer the extrusion is performed and the longer the power cable to be produced is, the more likely the ratio of molecular weight components will vary, making it more difficult to stably obtain high insulation.

Therefore, the present inventors investigated a method to suppress the thermal decomposition of the resin composition. As a result, the present inventors found that the thermal decomposition of the resin composition can be suppressed by performing extrusion while controlling an inside of the extruder to be an inert gas atmosphere. In addition, when the heating time increases due to retention of the resin composition in the extruder, thermal decomposition is likely to be accelerated. Thus, the present inventors found that the thermal decomposition of the resin composition can be better suppressed by configuring a screw and an extrusion orifice of an extruder in such a way that the resin composition is not retained in the extruder. The present inventors also found that in the extruded resin composition, high insulation can be stably developed by controlling the percentage of high molecular weight components having a molecular weight of $6 \times 10^5$ or more to 16% or more and the percentage of low molecular weight components having a molecular weight of $1 \times 10^4$ or less to less than 1.3%, relative to the base resin in the resin composition.

On the other hand, from the viewpoint of obtaining properties derived from the modified polymers modified with unsaturated carboxylic acid, the present inventors found that it is preferable to adjust the types and compounded amounts of the modified polymers used to yield the total content of the unsaturated carboxylic acid units in the base resin of 0.0003% or more.

The present disclosure is based on the above-described knowledges found by the inventors.

<Embodiments of Disclosure>

Next, embodiments of the present disclosure will be listed and described.
[1] A resin composition according to an aspect of this disclosure includes:

a base polymer (A) having propylene units; and
a modified polymer (B) having propylene units and modified with unsaturated carboxylic acid,
wherein a total content of the unsaturated carboxylic acid derived from the modified polymer (B) is 0.0003% or more; and
when the molecular weight distribution is measured, a percentage of components having a molecular weight of $1 \times 10^4$ or less is less than 1.3%, and a percentage of components having a molecular weight of $6 \times 10^5$ or more is 16% or more.

According to this configuration, high insulation can be stably obtained.
[2] A power cable according to another aspect of the present disclosure includes:

a conductor; and
an insulating layer covering a circumference of the conductor and formed of a resin composition,
wherein the resin composition contains

a base polymer (A) having propylene units, and
a modified polymer (B) having propylene units and modified with unsaturated carboxylic acid,

a total content of the unsaturated carboxylic acid derived from the modified polymer (B) contained in the resin composition is 0.0003% or more, and
when a molecular weight distribution of the resin composition is measured, a percentage of components having a molecular weight of $1 \times 10^4$ or less is less than 1.3%, and a percentage of components having a molecular weight of $6 \times 10^5$ or more is 16% or more.

According to this configuration, high breakdown voltage can be achieved even in high-temperature environments, enabling stable DC power transmission.
[3] In the power cable described above in [2],
the resin composition includes 90 parts by mass or more and 99 parts by mass or less of the base polymer (A) and 1 part by mass or more and 10 parts by mass or less of the modified polymer (B), taking a total content of the base polymer (A) and the modified polymer (B) as 100 parts by mass.
According to this configuration, high insulation can be stably obtained.
[4] In the power cable described above in [2],

the resin composition further includes a thermoplastic elastomer (C), and the resin composition includes 55 parts by mass or more and 90 parts by mass or less of the base polymer (A), 1 part by mass or more and 10 parts by mass or less of the modified polymer (B), and 10 parts by mass or more and 45 parts by mass or less of the thermoplastic elastomer (C), taking a total content of the base polymer (A), the modified polymer (B), and the thermoplastic elastomer (C) as 100 parts by mass.

According to this configuration, high insulation can be stably obtained while improving flexibility of the insulating layer.

[5] In the power cable described above in [4],

the thermoplastic elastomer (C) is a styrene-based elastomer having styrene units.

According to this configuration, higher insulation can be stably obtained in the insulating layer.

[6] In the power cable described above in any one of [2] to [5],

a number average molecular weight of the modified polymer (B) is 20000 or more.

According to this configuration, low molecular weight components contained in the resin composition can be further reduced.

[7] In the power cable according to any one of [2] to [6],

a number average molecular weight of the base polymer (A) is 80000 or more.

According to this configuration, the percentage of low molecular weight components contained in the resin composition can be further reduced while the percentage of high molecular weight components can be kept high.

[8] A method of producing a power cable according to another aspect of the present disclosure is a method of producing a power cable including a conductor, and an insulating layer covering a circumference of the conductor and formed of a resin composition, including:

a preparation step in which the resin composition is prepared; and
an insulating layer formation step in which the resin composition is extruded to cover the circumference of the conductor, thereby forming the insulating layer;
wherein, in the preparation step, a base polymer (A) having propylene units and a modified polymer (B) having propylene units and modified with an unsaturated carboxylic acid are added to the resin composition in an amount yielding a total content of the unsaturated carboxylic acid derived from the modified polymer (B) of 0.0003% or more, and the mixture is heated and mixed in an inert gas atmosphere.

According to this configuration, a power cable stably exhibiting high insulation can be produced.

[9] In the method of producing a power cable according to [8[,

in the preparation step, the resin composition is prepared using an extruder including a cylinder having a cylindrical shape, a screw that is inserted from a first direction of the cylinder and rotatably arranged, a discharge part that is attached to a second direction of the cylinder and provided with a pore part for discharging the resin composition, and an atmosphere control part for controlling an inside of the cylinder to be an inert gas atmosphere.

According to this configuration, high insulation can be more stably obtained.

[Details of the Embodiment of Disclosure]

Next, an embodiment of the present disclosure will be described below with reference to the drawings. The present invention is not limited to these illustrations, but intended to be indicated by claims and encompass all the changes which fall within the meaning and scope equivalent to claims.

<One Embodiment of Disclosure>

(1) Resin Composition

The resin composition of this embodiment can be used as a material for forming an insulating layer of a power cable described later. The resin composition contains a base polymer (A) having propylene units, a modified polymer (B) having propylene units and modified with unsaturated carboxylic acid, a thermoplastic elastomer (C), as needed, and other additives. Individual components will be described in detail below.

(Base Polymer (A))

The base polymer (A) is a resin material that constitutes the main component in the resin composition, and is a propylene-based resin having propylene units. Examples of the base polymer (A) include a propylene homopolymer (hereinafter also referred to as homo PP) and a propylene random polymer (hereinafter also referred to as random PP). The homo PP contains propylene units, while the random PP contains propylene units and ethylene units. The content of the ethylene units in the random PP is preferably 0.5 mass% or more and 15 mass% or less, for example. By setting the content of the ethylene units to 0.5 or mass% or more, spherulite growth (formation of coarse crystals) can be suppressed, and insulation can be kept high. On the other hand, by setting the content of the ethylene units to 15 mass% or less, reduction in melting points can be suppressed and usage under non-crosslinking or slight crosslinking can be stably realized.

From a viewpoint of obtaining higher insulation in the insulating layer, the base polymer (A) is preferably the random PP. Compared to the random PP, the homo PP has a higher crystal amount and provides high insulation, but may fail to provide inherent insulation because of causing inter- or intracrystalline cracking in the insulating layer. In contrast, the random PP contains ethylene units, and therefore has a lower crystal amount, but is less likely to cause cracking due to coarse crystallization in the insulating layer, and can provide high insulation compared to the homo PP.

As for tacticity, the propylene-based resin may be isotactic, syndiotactic, atactic, or the like. The tacticity is not particularly limited, but the propylene-based resin is preferably isotactic. For a composition obtained by mixing the base polymer (A) and the modified polymer B, when the tacticity thereof is isotactic, reduction in the melting point of the composition can be suppressed. As a result, it is possible to stably realize usage under non-crosslinking or slight crosslinking.

The number average molecular weight of the base polymer (A) is not particularly limited, but is preferably 80,000 or more, or may be 80,000 or more and 300,000 or less. With the base polymer (A) having such a number average molecular weight, in which the ratio of low molecular weight components having a molecular weight of $1 \times 10^4$ or less is small, the percentage of high molecular weight components contained in the resin composition can be adjusted to be larger, and the percentage of low molecular weight components can be adjusted to be smaller.

The number average molecular weight is calculated from the molecular weight distribution of the base polymer (A) measured by gel permeation chromatography (GPC) based on a calibration curve prepared using polystyrene (PS) as a standard sample. Details are discussed below in Examples.

The melt flow rate (MFR) of the base polymer (A) is preferably 0.1 g/10 min or more and 5.0 g/10 min or less, or may be 0.1 g/10 min or more and 2.0 g/10 min or less, from the viewpoint of the compatibility with the modified polymer (B) and the thermoplastic elastomer (C), as mentioned below. With such MFR, the phase structure in the resin composition can be formed into a compatible structure or a sea-island structure as described below. The MFR is a value measured in accordance with JIS K7210 at a temperature of 190°C with a load of 2.16 kg.

The melting point of the base polymer (A) is not limited, but the melting point is preferably 130°C or more and 165°C or less. The base polymer (A) having such a melting point, when mixed with the modified polymer (B), easily forms a phase structure which will be described below.

(Modified Polymer (B))

The modified polymer (B) is a resin having propylene units and modified with unsaturated carboxylic acid having polar groups. Since the modified polymer (B) has propylene units, it has excellent compatibility when mixed with the base polymer (A). The modified polymer (B) can be mixed with the base polymer (A) to introduce polar groups into the resin composition. The polar groups make it possible to trap space charges in the insulating layer formed from the resin composition. That is, the amount of accumulated space charges can be reduced in the insulating layer. As a result, the volume resistivity of the insulating layer can be improved, and high insulation can be stably ensured.

Specifically, the modified polymer (B) is unsaturated carboxylic acid-modified propylene (hereinafter also referred to simply as modified PP) in which polypropylene is modified with unsaturated carboxylic acid. Examples of the unsaturated carboxylic acid include acrylic acid, methacrylic acid, crotonic acid, maleic acid, cinnamic acid, itaconic acid, citraconic acid, and fumaric acid, as well as unsaturated carboxylic anhydrides such as maleic anhydride, itaconic anhydride, and citraconic anhydride. Among them, maleic anhydride is preferred. This is because maleic anhydride has a large number of polar groups per molecular weight and is therefore capable of modifying polypropylene even in small amounts.

In the modified polymer (B), the percentage of unsaturated carboxylic acid introduced into polypropylene (amount of modification) is not particularly limited, but is, for example, from 0.1% or more and 10% or less. By setting the amount of unsaturated carboxylic acid modification in polypropylene to 0.1% or more, the total content of the unsaturated carboxylic acid in the resin composition can be easily adjusted to 0.0003% or more and accumulation of space charges can be suppressed. On the other hand, by setting the amount of unsaturated carboxylic acid modification to polyolefin to 10% or less, compatibility with the base polymer (A) can be enhanced. The amount of modification indicates the copolymerization ratio of unsaturated carboxylic acid in the modified polymer (B).

The number average molecular weight of the modified polymer (B) is not particularly limited, but is preferably 20,000 or more, or may be 20,000 or more and 300,000 or less. With the modified polymer (B) having such a number average molecular weight, in which the ratio of low molecular weight components having a molecular weight of $1 \times 10^4$ or less is small, the percentage of low molecular weight components contained in the resin composition can be kept low.

The MFR of the modified polymer (B) is preferably 0.1 g/10 min or more and 500 g/10 min or less from the viewpoint of compatibility with the base polymer (A), or may be 1 g/10 min or more and 300 g/10 min or less. Such MFR facilitates the formation of the phase structure described below in the resin composition.

The melting point of the modified polymer (B) is not limited, but the melting point is preferably 130°C or more and 165°C or less. With the modified polymer (B) having such a melting point, it is easy to form the phase structure which will be described below, when mixed with the base polymer (A).

(Thermoplastic Elastomer (C))

The resin composition of this embodiment may include a thermoplastic elastomer (C) along with the base polymer (A) and modified polymer (B) mentioned above. The thermoplastic elastomer (C) has lower crystallinity compared to the base polymer (A) having propylene units, and can control the crystal growth of the base polymer (A) and impart flexibility to the resin composition and the insulating layer. As the thermoplastic elastomer (C), for example, known components such as amide-based, ester-based, olefin-based, styrene-based, urethane-based, vinyl chloride-based, and fluorine-based components can be used. Among them, styrene-based components are preferable. Styrene-based elastomers have styrene units and can trap electrons with aromatic rings to form a stable resonance structure, which can further improve the insulation of the insulating layer. In addition, when mixed with the base polymer (A) and the modified polymer (B), the phase structure described below can be easily formed, and the flexibility of the resin composition or the like can be further improved.

Specifically, the styrene-based elastomer is, for example, a copolymer containing styrene unit as a hard segment, and at least one monomer unit of ethylene, propylene, butylene, isoprene, and the like as a soft segment.

Examples of the styrene-based elastomer include styrene-butadiene-styrene block copolymers (SBS), hydrogenated styrene-butadiene-styrene block copolymers, styrene-ethylene-ethylene-propylene-styrene block copolymers (SEEPS), styrene-ethylene-propylene-styrene block copolymers (SEPS), styrene-isoprene-styrene copolymers (SIS), hydrogenated styrene-isoprene-styrene copolymers, hydrogenated styrene-butadiene rubbers, hydrogenated styrene-isoprene rubbers, styrene-ethylene-butylene-olefin crystalline block copolymers. Two or more of them may be used in combination.

The term "hydrogenated" as used herein means hydrogen being added to a double bond. For example, "hydrogenated styrene-butadiene block copolymer" means a polymer obtained by adding hydrogen to a double bond of a styrene-butadiene-styrene block copolymer. Note that hydrogen is not added to a double bond in the aromatic ring of the styrene. The term "hydrogenated styrene-butadiene-styrene block copolymer" can also be referred to as styrene-ethylene-butylene-styrene block copolymer (SEBS).

As the styrene-based elastomer, those having no double bonds in their chemical structures excluding benzene rings are preferred. The use of those having double bonds may result in thermally degraded resin component, for example, during molding of the resin composition, which may degrade the properties of the resulting insulating layer. In this regard, since those having no double bond has high resistance to thermal degradation, they can be used to keep the properties of the insulating layer higher.

The content of the styrene units in the styrene-based elastomer is not particularly limited, but is preferably 5 mass% or more and 50 mass% or less from the viewpoint of controlling the crystal growth of the base polymer (A) and flexibilizing the insulating layer. In addition, the content of the styrene units within the above range can ensure a predetermined amount of monomer units, such as ethylene units as a soft segment, and therefore improve the compatibility between the styrene-based elastomer and the base polymer (A). Accordingly, the insulation of the insulating layer can be stably improved.

The number average molecular weight of the thermoplastic elastomer (C) is not particularly limited, but is preferably 20,000 or more, or may be 20,000 or more and 300,000 or less. With the thermoplastic elastomer (C) having such a number average molecular weight, in which the ratio of low molecular weight components having a molecular weight of $1 \times 10^4$ or less is small, the percentage of low molecular weight components contained in the resin composition can be kept low.

The MFR of the thermoplastic elastomer (C) is preferably 0.1 g/10 min or more and 5.0 g/10 min or less, or may be 0.1 g/10 min or more and 2.0 g/10 min or less, from the viewpoint of compatibility with the base polymer (A). Such MFR facilitates the formation of the phase structure mentioned above in the resin composition.

The thermoplastic elastomer (C) preferably has no melting point, or preferably has a melting point of less than 165°C, if any. The thermoplastic elastomer (C) having such a melting point facilitates compatibilization with the base polymer (A) and formation of the phase structure mentioned below.

(Other Additives)

The resin composition may include other additives as desired. As the other additives, inorganic fillers, antioxidants, crosslinking agents, lubricants, and colorants may be included.

In this embodiment, since the space charge trapping effect by the modified polymer (B) can be obtained uniformly in the resin composition, high insulation can be stably obtained without addition of inorganic fillers. As mentioned below, from the viewpoint of suppressing clogging of the mesh during the extrusion step of the resin composition, the resin composition preferably contains no inorganic filler, but an inorganic filler may be added in such a small amount that does not cause clogging of the mesh.

When an inorganic filler is added, depending on the production conditions including the particle size, surface treatment conditions, and content of the inorganic filler, the mesh may gradually become clogged due to aggregation of the inorganic filler during the extrusion step of the insulating layer. Clogging of the mesh may increase the resin pressure during the extrusion step. For this reason, the insulation of the insulating layer may vary in the length direction of the cable, or moldability of the insulating layer itself may deteriorate. Therefore, the content of the inorganic filler is preferably set to a level that does not cause clogging of the mesh.

Specifically, the content of the inorganic filler in the resin composition is preferably set to, for example, less than 1 part by mass, taking the total content of the resin components such as the base polymer (A), the modified polymer (B), and the thermoplastic elastomer (C) as 100 parts by mass. The lower limit of the content of the inorganic filler is not limited as long as the inorganic filler can be added.

The inorganic filler may be at least one selected from the group consisting of magnesium oxide (MgO), silicon dioxide, zinc oxide, aluminum oxide, titanium oxide, zirconium oxide, carbon black, or a mixture of two or more of them.

Examples of a method of forming magnesium oxide include a vapor phase method in which Mg vapor and oxygen are brought into contact with each other, or a seawater method in which magnesium oxide is formed from seawater as a raw material. The method of forming the inorganic filler in this embodiment may be either a vapor phase method or a seawater method.

Silicon dioxide may be at least one selected from the group consisting of fumed silica, colloidal silica, precipitated silica, and vaporized metal combustion silica. Among them, fumed silica is preferable as silicon dioxide.

Moreover, the mean volume diameter (MV) of the inorganic filler is not particularly limited, but is preferably, for example, 1 $\mu$m or less, or may be 700 nm or less, or may be 100 nm or less. Note that the "mean volume diameter (MV)" referred to here is calculated using the following formula:

$$MV = \Sigma(V_i d_i)/\Sigma V_i$$

wherein $d_i$ is a particle diameter of a particle and $V_i$ is a volume of the particle.

For a measurement of the mean volume diameter, a dynamic light scattering-type particle diameter/particle size distribution measuring device is used.

Note that the lower limit of the mean volume diameter of the inorganic filler is not particularly limited. However, from the viewpoint of stably forming the inorganic filler, the mean volume diameter of the inorganic filler is preferably, for example, 1 nm or more, or may be 5 nm or more.

In addition, at least a part of the inorganic filler may be surface-treated with a silane coupling agent. The adhesion at an interface between the inorganic filler and the base polymer (A) can be improved, and the mechanical characteristics and insulation of the insulating layer 130 can be improved.

As the antioxidant, known antioxidants such as phenol-based, sulfur-based, and amine-based antioxidants can be used. Because of relatively low molecular weight, an antioxidant easily migrates when the resin composition is exposed to high temperature environments, causing localized accumulation of space charges in some cases. In this regard, from the viewpoint of inhibiting the migration of the antioxidant, the antioxidant preferably has a chemical structure with large steric hindrance. As the antioxidant having such a chemical structure is preferably a hindered phenol-based antioxidant, among phenol-based antioxidants. From the viewpoint of suppressing migration of the antioxidant, the molecular weight of the antioxidant is preferably large, specifically 500 or more. Note that the upper limit of the molecular weight is not particularly limited.

Examples of the hindered phenol based antioxidant include 2,2,6,6-tetra-t-butyl-4,4-dihydroxybiphenyl, N,N-(hexane-1,6-diyl)bis[3-(3,5-di-t-butyl-4-hydroxyphenyl)propanamide], 2,2-thio-diethylenebis[3-(3,5-di-t-butyl-4-hydroxyphenyl)propionate], ethylenebis(oxyethylene)bis[3-(5-t-butyl-4-hydroxy-m-tolyl)propionate], pentaerythrityl-tetrakis[3-(3,5-di-t-butyl-4-hydroxyphenyl)propionate], 4,4'-thiobis(3-methyl-6-t-butylphenol), 2,2-methylenebis(4-ethyl-6-t-butylphenol), octadecyl 3-(3,5-di-t-butyl-4-hydroxyphenyl)propionate, 2,4-bis-(n-octylthio)-6-(4-hydroxy-3,5-di-t-butylanilino)-1,3,5-triazine, diethyl[{3,5-bis(1,1-dimethylethyl)-4-hydroxyphenyl}methyl]phosphonate. It should be noted that two or more of them may be used in combination.

In the resin composition containing an antioxidant, a content of the antioxidant is not limited. However, the content of the antioxidant is preferably 0.1 parts by mass or more and 1.0 parts by mass or less, taking the total content of the resin components in the resin composition, herein referring to the base polymer (A) and the modified polymer(B), as 100 parts by mass.

In addition, from the viewpoint of recycling, the resin composition is preferably non-crosslinked, without crosslinking, but may include a crosslinking agent for crosslinking. When crosslinked, it is preferable to perform crosslinking to lower the gel fraction (degree of crosslinking). Specifically, it is preferable to perform crosslinking with the degree of crosslinking such that the residue of the crosslinking agent in the resin composition is less than 300 ppm. Note that, when dicumyl peroxide is used as a crosslinking agent, examples of the residue include cumyl alcohol and $\alpha$-methylstyrene.

The resin composition may contain a lubricant to improve flowability of the resin composition during the extrusion step of the insulating layer 130. Examples of the lubricant include a fatty acid metal salt and a fatty acid amide. Examples of the fatty acid metal salt include magnesium stearate, zinc stearate, aluminum stearate, and magnesium montanate. Examples of the fatty acid amide include oleic acid amide and stearic acid amide. Two or more of them may be used in combination.

(Amount of Unsaturated Carboxylic Acid in Resin Composition)

Since the resin composition contains the modified polymer (B) mentioned above, unsaturated carboxylic acid as a polar group derived from the modified polymer (B) is introduced in the resin composition. The total content of the unsaturated carboxylic acid contained in the resin composition can be adjusted by the amount of unsaturated carboxylic acid modification in the modified polymer (B) or the content of the modified polymer (B). In this embodiment, the total content of the unsaturated carboxylic acid contained in the resin composition is 0.0003% or more, and preferably 0.003% or more. The upper limit of the total content is not particularly limited. It is preferable to appropriately change the upper limit of the total content to allow the percentage of low molecular weight components in the resin composition to fall within a predetermined range. Generally, the modified polymer (B) has a lower molecular weight than that of the base polymer (A). Therefore, the more the content of the modified polymer (B) and the more the total content of the unsaturated carboxylic acid, the higher the percentage of low molecular weight components. For this reason, it is preferable to appropriately adjust the total content of the unsaturated carboxylic acid within a range in which the percentage of low molecular weight components does not exceed a predetermined value. For example, the upper limit of the total content of the unsaturated carboxylic acid is preferably 0.5% or less, or may be 0.25% or less. By setting the upper limit to 0.0003% or more, the accumulation of space charges in the resin composition can be suppressed. On the other hand, by setting the upper limit to 0.5% or less, it is possible to ensure a predetermined content of the base polymer (A) while suppressing the accumulation of space charges and maintain high dielectric breakdown strength in the resin composition. The total content of the unsaturated carboxylic acid is a value calculated from the peak area derived from the polymer backbone and the peak area derived from unsaturated carboxylic acids, based on the spectrum obtained by 1H-NMR measurements, as discussed in detail in Examples.

(Molecular Weight Distribution of Resin Composition)

When the molecular weight distribution is measured, the resin composition has a molecular weight distribution of a predetermined width derived from the base polymer (A) and modified polymer (B) contained in the resin composition. When the thermoplastic elastomer (C) is contained, the polymer has a molecular weight distribution of a predetermined width derived from the base polymer (A), the modified polymer (B) and the thermoplastic elastomer (C). In this embodiment, as for the molecular weight distribution of the resin composition, the percentage of high molecular weight components having a molecular weight of $6 \times 10^5$ or more is 16% or more, and the percentage of low molecular weight components having a molecular weight of $1 \times 10^4$ or less is less than 1.3%. The percentage of high molecular weight components may be 19% or more, or may be 20% or more. The percentage of low molecular weight components may be 0.9% or less, or may be 0.8% or less.

The percentage of high molecular weight components means the percentage of high molecular weight components in the entire resin composition, and is the ratio of the area of the region having a molecular weight of $6 \times 10^5$ or more to the area of the entire molecular weight distribution in the molecular weight distribution. The percentage of low molecular weight components means the percentage of low molecular weight components in the entire resin composition, and is the ratio of the area of the region having a molecular weight of $1 \times 10^4$ or less to the area of the entire molecular weight distribution in the molecular weight distribution. The percentage of each molecular weight component can be adjusted by the content of the modified polymer (B) or the thermoplastic elastomer (C) having a lower molecular weight compared to the base polymer (A) or by the number average molecular weight thereof. The lower limit of the low molecular weight components is not particularly limited, but is 0.0001%, for example.

(Phase Structure of Resin Composition)

Since the resin composition includes the base polymer (A) and the modified polymer (B), or these polymers and the thermoplastic elastomer (C) mixed therein, it has a predetermined phase structure. Specifically, in a two-component system containing the base polymer (A) and the modified polymer (B), a structure in which these polymers are compatible with each other or a sea-island structure in which the modified polymer (B) is finely dispersed in the base polymer (A). In the resin composition, from the viewpoint of suppressing accumulation of space charges and stably obtaining high insulation, it is preferable that the modified polymer (B) be finely dispersed, and, in a case of a sea-island structure, the diameter of the island phase formed from the modified polymer (B) be less than 0.5 $\mu$m. Alternatively, it is preferable that the phase structure is a structure in which components are compatible with each other. On the other hand, in the three-component system that further includes the thermoplastic elastomer (C), the phase structure is a sea-island structure in which the thermoplastic elastomer (C) is finely dispersed in the phase structure of the two-component system mentioned above. The term "compatible" means that, for example, when the phase structure is observed under a transmission electron microscope, no phase separation is observed and components are uniformly dispersed.

From the viewpoint of forming the phase structure mentioned above, the MFRs of components in the resin composition are preferably close to each other and the divergence between these MFRs is preferably small. Specifically, when the resin composition contains the base polymer (A) and the modified polymer (B), the difference in these MFRs is preferably 300 g/10 min or less. When the resin composition further contains the thermoplastic elastomer (C), the difference between the highest viscosity and the lowest viscosity of the components is preferably 300 g/10 min or less. This combination of components that results in such a difference in MFR allows each component to be finely dispersed upon mixing.

(Compounding Ratio)

The compounding ratio of the base polymer (A), the modified polymer (B), and the thermoplastic elastomer (C) in the resin composition is not particularly limited, as long as the total content of the unsaturated carboxylic acid in the resin composition can be 0.0003% or more, and the percentage of high molecular weight components having a molecular weight of $6 \times 10^5$ or more can be 16% or more and the percentage of low molecular weight components having a molecular weight of $1 \times 10^4$ or less can be less than 1.3%, in the molecular weight distribution. It is preferable that the content of each component be adjusted according to the amount of unsaturated carboxylic acid modification in the modified polymer (B) to be used or the number average molecular weight of the modified polymer (B) or the thermoplastic elastomer (C).

Specifically, when the resin composition contains the base polymer (A) and the modified polymer (B), the content of the base polymer (A) is preferably 90 parts by mass or more and 99 parts by mass or less, and the content of the modified polymer (B) is preferably 1 part by mass or more and 10 parts by mass or less, taking the total content of these polymers as 100 parts by mass. On the other hand, when the resin composition further contains the thermoplastic elastomer (C), the content of the base polymer (A) is preferably 55 parts by mass or more and 90 parts by mass or less, the content of the modified polymer (B) is preferably 1 part by mass or more and 10 parts by mass or less, and the content of the thermoplastic elastomer (C) is preferably 10 parts by mass or more and 45 parts by mass or less, taking the total content of them as 100 parts by mass. With such a content, the total content of the unsaturated carboxylic acid in the resin composition and the percentage of low molecular weight components can be easily adjusted within the above-mentioned range.

(2) Power cable

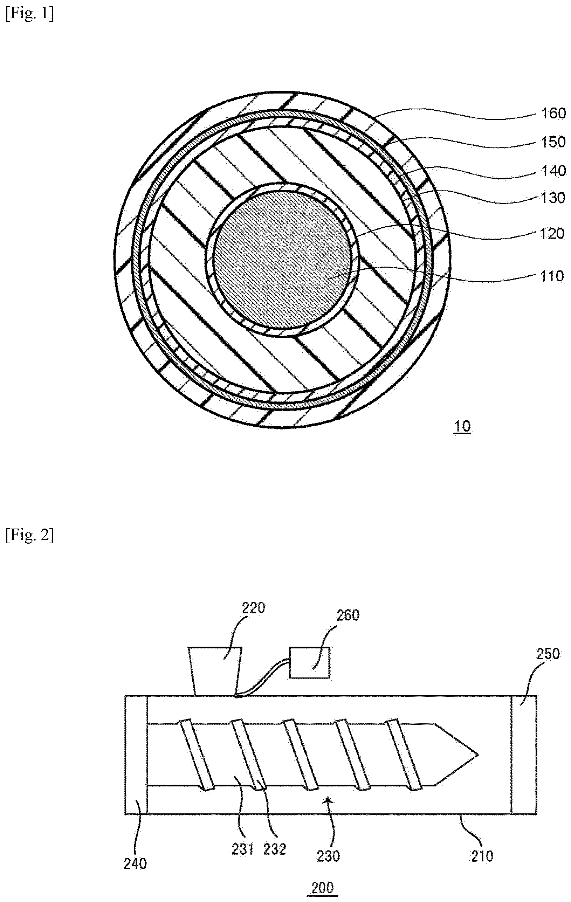

Next, with reference to FIG. 1, the power cable of this embodiment will be described. FIG. 1 is a cross-sectional diagram orthogonal to the axial direction of the power cable according to this embodiment.

The power cable 10 of this embodiment is configured as a so-called solid insulation power cable. In addition, the power cable 10 of this embodiment is configured, for example, to be laid on the ground (in a pipeline), under water, or on the bottom of water. The power cable 10 is used, for example, for direct current.

Specifically, the power cable 10 includes, for example, a conductor 110, an internal semiconductive layer 120, an insulating layer 130, an external semiconductive layer 140, a shielding layer 150, and a sheath 160.

(Conductor (Conductive Part))

The conductor 110 is configured by twisting together a plurality of conductor core wires (conductive core wires) including, for example, pure copper, copper alloy, aluminum, aluminum alloy, or the like.

(Internal Semiconductive Layer)

The internal semiconductive layer 120 is provided to cover the outer circumference of the conductor 110. In addition, the internal semiconductive layer 120 has semiconductivity and is configured to suppress electric field concentration on the surface side of the conductor 110. The internal semiconductive layer 120 includes, for example, at least any one selected from the group consisting of ethylene-based copolymers such as ethylene-ethyl acrylate copolymers, ethylene-methyl acrylate copolymers, ethylene-butyl acrylate copolymers, and ethylene-vinyl acetate copolymers, thermoplastic elastomers, the above-described low-crystallinity resins and the like, together with conductive carbon black.

(Insulating Layer)

The insulating layer 130 is provided to cover the outer circumference of the internal semiconductive layer 120, and formed of the resin composition mentioned above. For example, the insulating layer 130 is formed by extruding the resin composition.

(External Semiconductive Layer)

The external semiconductive layer 140 is provided to cover the outer circumference of the insulating layer 130. In addition, the external semiconductive layer 140 has semiconductivity, and is configured to suppress electric field concentration between the insulating layer 130 and the shielding layer 150. The external semiconductive layer 140 is constituted by the same material as the internal semiconductive layer 120, for example.

(Shielding Layer)

The shielding layer 150 is provided to cover the outer circumference of the external semiconductive layer 140. The shielding layer 150 is, for example, configured by winding a copper tape, or configured as a wire shield formed by winding a plurality of soft copper wires. A tape including rubberized cloth or the like as a raw material may be wound inside or outside the shielding layer 150.

(Sheath)

The sheath 160 is provided to cover the outer circumference of the shielding layer 150. The sheath 160 is constituted by polyvinyl chloride or polyethylene, for example.

For an underwater cable or a subaqueous cable, the power cable 10 of this embodiment may have a metallic water shielding layer such as a so-called aluminum cladding or an iron wire armoring outside the shielding layer 150.

On the other hand, the power cable 10 of this embodiment does not have to include a water shielding layer outside the shielding layer 150, for example. That is, the power cable 10 of this embodiment may have an imperfect water shielding structure.

(Specific Dimensions etc.)

Specific dimensions of the power cable 10 are not particularly limited. For example, the diameter of the conductor 110 is 5 mm or more and 60 mm or less, the thickness of the internal semiconductive layer 120 is 0.5 mm or more and 3 mm or less, the thickness of the insulating layer 130 is 3 mm or more and 35 mm or less, the thickness of the external semiconductive layer 140 is 0.5 mm or more and 3 mm or less, the thickness of the shielding layer 150 is 0.1 mm or more and 5 mm or less, and the thickness of the sheath 160 is 1 mm or more. The DC voltage applied to the power cable 10 of this embodiment is, for example, 20 kV or more.

(3) Cable properties

In this embodiment, as described above, when the resin composition contains at least the base polymer (A) and the modified polymer (B), and the total content of the unsaturated carboxylic acid in the resin composition and the percentages of high molecular weight components and low molecular weight components in the molecular weight distribution satisfy a predetermined requirements, high insulation can be stably obtained in the insulating layer 130.

Specifically, the insulating layer 130 of this embodiment satisfies the requirements for the following insulation properties measured under the conditions at high temperatures and high electric field, for example. The measurement is performed, for example, on a sheet taken from a central portion of the insulating layer 130 in the thickness direction. At this time, the sheet of the insulating layer 130 has a thickness of 0.2 mm, for example.

For the insulating layer 130, an accumulated amount of space charges measured under the condition at a temperature of 90°C and a DC electric field of 40 kV/mm is preferably 100% or less, or may be 25% or less, for example. An accumulated amount of space charges measured under the condition at a temperature of 90°C and a DC electric field of 80 kV/mm is preferably, for example, 100% or less, or may be 30% or less.

The accumulated amount of space charges is determined by a current integrated charge method. In the current integrated charge method, electric charges are accumulated in a capacitor for measurement connected in series with a sheet as a sample, and an amount of charge, which is an integrated value of the current, is evaluated. Specifically, a DC electric field of 40 kV/mm or 80 kV/mm is continuously applied to the sample at a temperature of 90°C, and the accumulated amount of space charges is calculated by the following formula based on the amount of charge $Q_{300}$ after 300 seconds has elapsed and the amount of charge $Q_0$ immediately after the application (0 seconds).

$$\text{Accumulated amount of space charges} = (Q_{300}/Q_0 - 1) \times 100$$

Furthermore, the volume resistivity of the sheet of insulating layer 130 measured under conditions at a temperature of 90°C and a DC electric field of 40 kV/mm, or under conditions at a temperature of 90°C and a DC electric field of 80 kV/mm is preferably, for example, $1.0 \times 10^{15}$ Ω·cm or more, and may be $7.0 \times 10^{15}$ Ω·cm or more.
The DC breakdown electric field strength of the sheet of the insulating layer 130 measured under conditions at a temperature of 90°C is preferably, for example, 160 kV/mm or more, or may be 200 kV/mm or more.

(3) Extruder

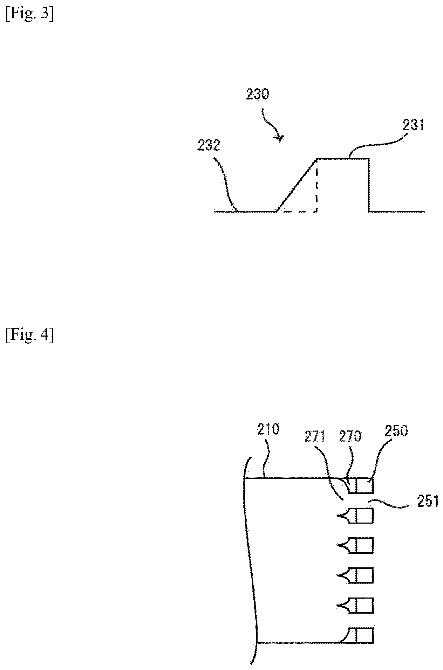

Next, prior to a method of producing the power cable of this embodiment, the extruder used in the method of producing the power cable of this embodiment will be described with reference to FIG. 2. FIG. 2 is a schematic configuration diagram of an extruder used in a method of producing a power cable according to an embodiment of the present disclosure.
As illustrated in FIG. 2, the extruder 200 is configured to include a cylinder 210 which is cylindrical and in which materials for the resin composition are supplied, a hopper 220 for supplying materials into the cylinder 210, a screw 230 which is inserted from the first direction (left in FIG. 2) of the cylinder 210 and rotatably arranged, a rotary drive mechanism 240 which rotates the screw 230, a discharge part 250 attached to the second direction (right in FIG. 2) of the cylinder 210 and provided with a pore part through which the resin composition is discharged, and an atmosphere control part 260 which controls an inside of the cylinder 210 to be an inert gas atmosphere. Hereinafter, the first direction is also referred to as an upstream side in the heat mixing of the resin composition, and the second direction is also referred to as a downstream side.
The cylinder 210, which is cylindrical, has a space for housing and mixing materials therein. In the cylinder 210 which is cylindrical, materials supplied in its inner space are mixed with a screw 230. The screw 230 is inserted from an end in the first direction of the cylinder 210, and placed at the middle of the axial direction of the cylinder 210. The screw 230 is connected to and rotatably supported by a rotary drive mechanism 240. The screw 230 is configured to be rotated by the rotary drive mechanism 240 to extrude the materials toward the discharge part 250 while mixing them. The screw 230 may be uniaxial or biaxial. In FIG. 2, two screws 230 configured as biaxial are arranged side by side in the depth direction of the paper, and one of the screws 230 is depicted. As the rotary drive mechanism 240, for example, a known rotary motor can be used.
In the screw 230, a screw flight 232 is helically arranged on the surface of the screw body part 231. The cross-sectional shape of the screw flight 232 is not particularly limited, but is preferably tapered, as illustrated in FIG. 3. FIG. 3 is a schematic diagram for explaining the shape of the screw flight, and is a cross-sectional diagram along the axial direction of the screw 230. In FIG. 3, a tip direction of the screw 230 (second direction of the cylinder 210) is a direction toward the right side, and an end direction of the screw 230 (first direction of the cylinder 210) is a direction toward the left. When the screw flight 232 has a rectangular shape, as illustrated by the dashed line in FIG. 3, the resin composition tends to be retained on the end side of the screw flight 232, and the retained resin composition may be thermally decomposed in some cases. Therefore, as for the cross-sectional shape of the screw flight 232, the side surface on the end side is preferably tapered, as illustrated in FIG. 3, from the viewpoint of suppressing the retention of the resin composition on the surface of the screw 230. In other words, the angle between the side surface of the screw flight 232 on the first-direction side and the front surface of the screw body part 231 is preferably blunt. For example, it is preferable to set the angle from 120° to 145°.
The discharge part 250 is arranged at the end in the second direction of the cylinder 210. The discharge part 250 is configured, for example, to have a plurality of pore parts that penetrate in the thickness direction to extrude the resin composition that has been mixed and prepared in the cylinder 210 to the outside. For example, a breaker plate can be used as the discharge part 250. A mesh or the like may be placed between the cylinder 210 and the discharge part 250 for the purpose of removing foreign matter contained in the resin composition.
As illustrated in FIG. 4, a retention suppression member 270 may be placed at the position in contact with the discharge part, in the end part in the second direction inside the cylinder 210. FIG. 4 is a schematic diagram for explaining a retention suppression member, and is a cross-sectional diagram of the end part in the second direction of the cylinder 210. As illustrated in FIG. 4, the retention suppression member 270 suppresses the retention of the resin composition in the cylinder 210 and promotes extrusion from the discharge part 250. The retention suppression member 270 has a plurality of tapered pore parts 271 that penetrate the retention suppression member 270 in the thickness direction with gradually decreasing diameter toward the thickness direction. The retention control member 270 is arranged to allow the smaller-diameter side of the tapered pore part 271 to be communicated with the pore part 251 of the discharge part 250. Thus, the retention suppression member 270 can suppress the retention of the resin composition at the edge of the pore part 251 of the discharge part 250 and at the corner between the inner wall of the cylinder 210 and the discharge part 250. The retention suppression member 270 is preferably constituted by the same material as that of the breaker plate, for example.

An atmosphere control part 260 that controls an inside of the cylinder 210 to be an inert gas atmosphere is connected to the cylinder 210. The atmosphere control part 260 is configured to supply an inert gas to the inside of the cylinder 210. Although air may get mixed into the inside of the cylinder 210 as materials are supplied from the hopper 220, the atmosphere control part 260 can control the inside of the cylinder 210 to be an inert gas atmosphere. Thus, materials to be mixed or the resulting resin composition can be prevented from being oxidized by air and thermally decomposed. That is, the increase in the percentage of low molecular weight components in the resin composition can be suppressed while the percentage of high molecular weight components can be kept high.

The inert gas is not particularly limited. For example, nitrogen gas or argon gas may be used as the inert gas.

The extruder 200 may include a heating part (not shown) or the like for heating the inside of the cylinder 210. As the heating part, a conventionally known one can be used.

(4) Method of producing power cable

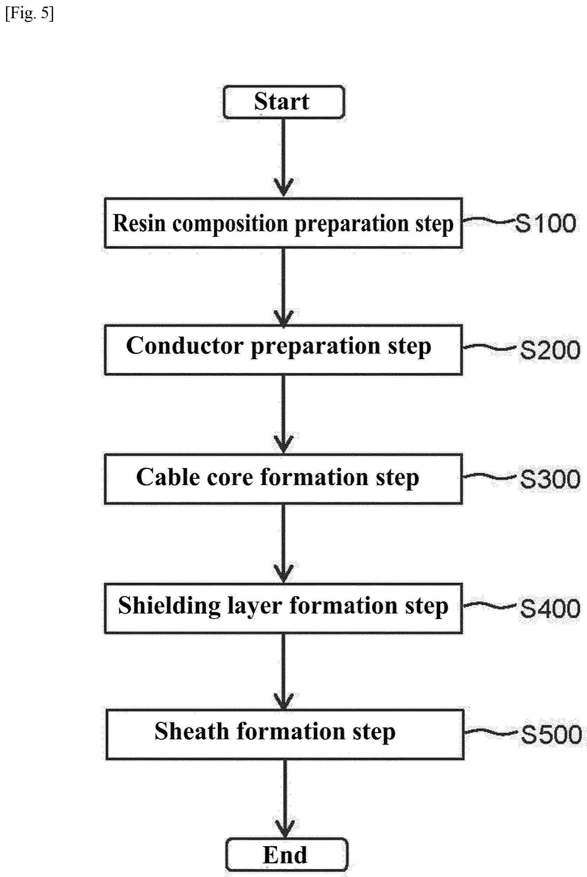

Next, a method of producing the power cable of this embodiment will be described with reference to FIG. 5. FIG. 5 is a flow chart illustrating a method of producing the power cable according to an embodiment of the present disclosure. Hereinafter, a step is abbreviated as "S".

(S 100: Resin Composition Preparation Step)

First, the resin composition for forming the insulating layer 130 is prepared.

In this embodiment, for example, a base polymer (A) which is a propylene-based resin, a modified polymer (B) which is a modified polypropylene, and, as needed, a thermoplastic elastomer (C) and other additives (an antioxidant, etc.) are supplied to an extruder 200 illustrated in FIG. 2. Then, the materials supplied from a hopper 220 are mixed inside a cylinder 210 with heating. At this time, an inside of the cylinder 210 is controlled to be an inert gas atmosphere by the atmosphere control part 260. Then, the resin composition obtained by heat mixing is extruded from the discharge part 250 and granulated. Thus, pellet-shaped resin compositions, which are to constitute the insulating layer 130, are obtained.

It is preferable that the content of each component be appropriately adjusted depending on the amount of unsaturated carboxylic acid modification in the modified polymer (B) and the number average molecular weight of the thermoplastic elastomer (C). For example, in a case where the base polymer (A) and the modified polymer (B) are used, it is preferable to add 90 parts by mass or more and 99 parts by mass or less of the base polymer (A) and 1 part by mass or more and 10 parts by mass or less of the modified polymer (B). For example, in a case where a thermoplastic elastomer (C) is further used, it is preferable to add 55 parts by mass or more and 90 parts by mass or less of the base polymer (A), 1 part by mass or more and 10 parts by mass or less of the modified polymer (B), and 10 parts by mass or more and 45 parts by mass or less of the thermoplastic elastomer (C).

In the resin composition preparation step S100, the components are heat-mixed and extruded in an inert gas atmosphere, thereby suppressing variations in the percentages of high molecular weight components and low molecular weight components that occur when the resin composition is heated.

(S200: Conductor Preparation Step)

Meanwhile, the conductor 110 formed by twisting a plurality of conductor core wires together is prepared.

(S300: Cable Core Formation Step (Extrusion Step, Insulating Layer Formation Step))

After the resin composition preparation step S100 and the conductor preparation step S200 are completed, the insulating layer 130 is formed using the resin composition to cover the outer circumference of the conductor 110 at the thickness of 3 mm or more, for example.

At this time, in this embodiment, the internal semiconductive layer 120, the insulating layer 130, and the external semiconductive layer 140 are formed simultaneously using a three-layer co-extruder, for example.

Specifically, for example, a composition for the internal semiconductive layer is charged into an extruder A of the three-layer co-extruder, the extruder A forming the internal semiconductive layer 120. The pellet-shaped resin composition mentioned above is charged into an extruder 200 illustrated in FIG. 2, as an extruder B forming the insulating layer 130. At this time, an inside of the cylinder 210 of the extruder 200 is control to be an inert gas atmosphere. The set temperature of the extruder B is appropriately set to a temperature higher than the desired melting point by 10°C or more and 80°C or less, for example. It is preferable to appropriately set the set temperature based on the linear velocity and extrusion pressure. A composition for the external semiconductive layer is charged into an extruder C forming the external semiconductive layer 140, the composition including materials similar to those of the resin composition for the internal semiconductive layer charged into the extruder A.

Then, the respective extrudates from the extruders A to C are guided to a common head, and the internal semiconductive layer 120, the insulating layer 130, and the external semiconductive layer 140, outwardly from the inside, are simultaneously extruded on the outer circumference of the conductor 110. Accordingly, an extruded material that is to be a cable core is formed.

The extruded material is then cooled, for example, with water.

In the cable core formation step S300, the pellet-shaped resin composition is mixed with heating in an inert gas atmosphere, and then extruded, thereby suppressing variations in the percentages of high molecular weight components and low molecular weight components due to heating. As a result, in the insulating layer 130, the percentage of low molecular weight components can be kept low while the percentage of high molecular weight components is kept high. Moreover, even when extrusion is carried out continuously for a long time, the variation in the percentage can be suppressed.

The cable core configured by the conductor 110, the internal semiconductive layer 120, the insulating layer 130, and the external semiconductive layer 140 is formed by the cable core formation step S300 described above.

(S400: Shielding Layer Formation Step)

After the cable core is formed, the shielding layer 150 is formed outside the external semiconductive layer 140, for example, by winding a copper tape therearound.

(S500: Sheath Formation Step)

After the shielding layer 150 is formed, vinyl chloride is charged into an extruder, and extruded from the extruder to form a sheath 160 on the outer circumference of the shielding layer 150.

As described above, the power cable 10 as the solid insulation power cable is produced.

(4) Effects according to this embodiment

According to this embodiment, one or more than one effects described below are achieved.

(a) The resin composition of this embodiment includes a base polymer (A) having propylene units, and a modified polymer (B) having propylene units and modified with unsaturated carboxylic acid, with the total content of the unsaturated carboxylic acid being 0.0003% or more. The modified polymer (B) enables introduction of the unsaturated carboxylic acids having polarity into the resin composition. By setting the total content of the unsaturated carboxylic acid to 0.0003% or more, the space charge can be trapped in the resin composition, and its accumulation can be suppressed. Moreover, the resin composition is constituted to include less than 1.3% of low molecular weight components having a molecular weight of $1 \times 10^4$ or less, and 16% or more of high molecular weight components having a molecular weight of $6 \times 10^5$ or more, the percentages being determined upon measurement of a molecular weight distribution. In other words, the percentage of the high molecular weight components that contribute to insulation is increased, while the percentage of the low molecular weight components that migrate in the resin composition and cause localized accumulation of space charges is decreased. According to the resin composition, high insulation can be achieved, and the space charge trapping effect by the modified polymer (B) can be stably developed and local accumulation of space charges can be suppressed, even in a high temperature environment. Therefore, by forming the insulating layer 130 with the above resin composition, high insulation can be stably obtained. Specifically, the insulating layer 130 can be made high-withstand-voltage even at high temperatures. In other words, the power cable 10 of this embodiment enables stable DC power transmission.

(b) During the preparation of the resin composition, the base polymer (A), the modified polymer (B), and the thermoplastic elastomer (C), as needed, are supplied into the cylinder 210 of the extruder 200 and heated and mixed in an inert gas atmosphere. When heat mixing is performed in an atmosphere containing oxygen, each component may be decomposed due to heating, which may lead to lower molecular weight. Moreover, the prepared resin composition may remain inside the cylinder 210 and be heated for a long time, which may further reduce the molecular weight. In this regard, by mixing in an inert gas atmosphere, the decomposition of each component can be suppressed and the decrease in the percentage of the high molecular weight components and the increase in the percentage of the low molecular weight components can be suppressed. Accordingly, it becomes easier to adjust the percentage of each molecular weight component to fall within the above range, and the above-mentioned effect (a) can be obtained more reliably.

(c) In addition, during preparation of the resin composition, it is preferable that the screw flight 232 of the screw 230 in the extruder 200 be configured to have a tapered shape on the first-direction side. When the screw flight 232 has a rectangular shape, the resin composition is likely to be stemmed by the screw flight 232 and tends to be retained inside the cylinder 210. In this regard, by configuring the screw flight 232 to form the side surface of the screw flight on the first-direction side in a tapered shape, it is possible to suppress the retention of the resin composition and to suppress decrease in the percentage of high molecular weight components and increase in the percentage of low molecular weight components due to heating for a long time. Thus, the above-mentioned effect (a) can be more reliably obtained.

(d) During preparation of the resin composition, it is preferable to place a retention suppression member 270 between the cylinder 210 and the discharge part 250 of the extruder 200, the retention suppression member 270 having a plurality of tapered pore parts 271 that penetrate in the thickness direction, with their diameters decreasing from the first direction toward the second direction. When the resin composition is pushed out of the discharge part 250, it may be stemmed by the edge of the pore part 251 in the discharge part 250 and may be retained inside the cylinder 210. In this regard, placing a retention suppression member 270 having tapered pore parts 271 makes it easier to extrude the resin composition out, without allowing the resin composition to be retained inside the cylinder 210. Thus, variation in the percentage of each molecular weight component can be suppressed, and the above-mentioned effect (a) can be obtained more reliably.

(e) The resin composition includes 90 parts by mass or more and 99 parts by mass or less of the base polymer (A) and 1 part by mass or more and 10 parts by mass or less of the modified polymer (B), taking a total content of the base polymer (A) and the modified polymer (B) as 100 parts by mass. By employing such a compounded amount, the percentage of low molecular weight components can be reduced while maintaining the total content of the unsaturated carboxylic acid in the above range, and the above-mentioned effect (a) can be obtained more reliably.

(f) The resin composition further includes a thermoplastic elastomer (C), and preferably includes 55 parts by mass or more and 90 parts by mass or less of the base polymer (A), 1 part by mass or more and 10 parts by mass or less of the modified polymer (B), and 10 parts by mass or more and 45 parts by mass or less of the thermoplastic elastomer (C), taking a total content of the base polymer (A), the modified polymer (B), and the thermoplastic elastomer (C) as 100 parts by mass. The thermoplastic elastomer (C) can suppress excessive crystal growth of the base polymer (A) having propylene units and impart flexibility to the resin composition. By setting the content of each component in the above range, the total content of the unsaturated carboxylic acid and the percentage of each molecular weight component can be adjusted in a predetermined range to more reliably obtain the above-mentioned effect (a), while obtaining the effect of improved flexibility by thermoplastic elastomer (C).

(g) The thermoplastic elastomer (C) is preferably a styrene-based elastomer. Since the styrene-based resin can trap electrons by aromatic rings to form a stable resonance structure, it can further improve the insulation of the resin composition.

(h) The number average molecular weight of the modified polymer (B) is preferably 20,000 or more. The number average molecular weight of the base polymer (A) is preferably 80,000 or more. Such base polymer (A) or modified polymer (B) can more reliably decrease the percentage of the low molecular weight components in the resin composition, thereby further suppressing accumulation of space charges.

(i) In addition, for a two-component system containing the base polymer (A) and the modified polymer (B), the phase structure of the resin composition is preferably a structure in which these polymers are compatible with each other, or has a sea-island structure in which the modified polymer (B) is finely dispersed in the base polymer (A). For the sea-island structure, the diameter of the island phase formed from the modified polymer (B) is preferably less than 0.5 μm. For a three-component system further containing the thermoplastic elastomer (C), the phase structure preferably has a sea-island structure in which the thermoplastic elastomer (C) is finely dispersed in the phase structure of the two-component system mentioned above. Such a phase structure can uniformly disperse each component in the resin composition and trap space charges more uniformly in the resin composition. Accordingly, insulation can be more stably obtained.

(j) The resin composition preferably contain no inorganic filler. Here, containing no inorganic filler means that an inorganic filler is not intentionally added. For example, the content of the inorganic filler is preferably less than 1 part by mass relative to 100 parts by mass of the resin component. Accordingly, clogging of the mesh can be suppressed during the extrusion of the resin composition. As a result, it is possible to suppress variation in the insulation in the length direction of the insulating layer 130 formed by extruding the resin composition. In addition, the degradation of moldability of the insulating layer 130 itself can be suppressed. That is, when an elongated power cable 10 is produced by a continuous extrusion step, the elongated power cable 10 as a whole can obtain stable insulation.

(k) The resin composition is preferably non-crosslinked. Thus, the resin composition can be recycled.

(l) The resin composition may further contain an antioxidant from the viewpoint of preventing deterioration, and the antioxidant is preferably a hindered phenol-based antioxidant. The molecular weight of the antioxidant may be 500 or more. Hindered phenol-based antioxidants have a greater steric hindrance compared to other antioxidants, and therefore can suppress migration in the resin composition. Moreover, by setting the molecular weight of the antioxidant to 500 or more, migration in the resin composition can be suppressed. Therefore, when the resin composition is exposed to a high temperature environment, localized accumulation of space charges due to the migration of antioxidants can be suppressed.

<Other embodiments of disclosure>

Although embodiment of the present disclosure has been specifically described, the present disclosure is not limited to the embodiment mentioned above, and various modifications can be made without departing from the gist of the present disclosure.

In the above-described embodiment, an explanation is given for a case where the power cable 10 may have no water shielding layer, but the present disclosure is not limited to the case. The power cable 10 may have a simple water shielding layer. Specifically, the simple water shielding layer is made of, for example, a metallic laminated tape. Metallic laminated tape includes a metal layer made of aluminum, copper, or the like, and an adhesive layer provided on one or both sides of the metal layer, for example. The metal laminated tape is wrapped longitudinally around the outer circumference of a cable core (outer circumference outward of the external semiconductive layer) to surround the cable core, for example. Note that this water shielding layer may be provided outside the shielding layer, or may also serve as the shielding layer. This configuration can reduce the cost of the power cable 10.

In the above-described embodiments, an explanation is given for a case where the power cable 10 is configured to be laid on the ground, under water, or on the bottom of water, but the present disclosure is not limited to the case. For example, the power cable 10 may be configured as a so-called overhead wire (overhead insulated wire).

In the above-described embodiment, three layers are extruded simultaneously in the cable core formation step S300, but they may be individually extruded.

[Examples]

Next, examples according to the present disclosure will be described. These examples are illustrative of the present disclosure, and the present disclosure is not limited by these examples.

(1) Regarding materials

The materials used in the preparation of the resin composition are listed below.

Random polypropylene (PP1) was prepared as the base polymer (A), maleic acid-modified polypropylene (MAH-PP1 to MAH-PP3) was prepared as the modified polymer (B), and a hydrogenated styrene-based thermoplastic elastomer (SEBS 1) was prepared as the thermoplastic elastomer (C). The physical properties of each component are as follows:

- PP1: number average molecular weight, 140,000; MFR, 0.5 g/10 min; melting point, 145°C
- MAH-PP 1: number average molecular weight, 58,000; amount of maleic acid modification, 0.3 mass%; MFR, 6 g/10 min; melting point, 160°C
- MAH-PP2: number average molecular weight, 41,000; amount of maleic acid modification, 0.8 mass%; MFR, 110 g/10 min; melting point 158°C
- MAH-PP3: number average molecular weight, 15,000; amount of maleic acid modification, 1.8 mass%; MFR, 900 g/10 min; melting point 145°C
- SEBS1: number average molecular weight, 150,000; amount of styrene, 15 mass%; MFR, 0.2 g/10 min; no melting point

As for other additives, pentaerythrityl-tetrakis[3-(3,5-di-t-butyl-4-hydroxyphenyl)propionate] (molecular weight 1178), a hindered phenol-based antioxidant, was prepared as the antioxidant.

(2) Preparation of resin composition

The above materials were supplied to an extruder in the compounded amounts shown in Table 1 below, and were heated, mixed, and granulated by the extruder to prepare samples 1 to 6. For preparation of the resin composition, the extrusion conditions were changed as follows. For Sample 1, extrusion was performed using the above-mentioned extruder while purging the inside of the cylinder with nitrogen gas and employing a screw in which a side surface of the screw flight on the first-direction side was formed in a tapered shape. For Sample 2, extrusion was performed in the same manner as for Sample 1, except that a screw in which a screw flight had a rectangular cross-sectional shape was used. For Sample 3, extrusion was performed in the same manner as for Sample 1, except that the inside of the cylinder was not purged with nitrogen gas. For Sample 4, extrusion was performed in the same manner as for Sample 1, except that purging with nitrogen gas was not performed, and the screw flight had a rectangular shape. For Sample 5, extrusion was performed in the same manner as for Sample 4, except that the materials used and the compounded amounts were changed. For Sample 6, extrusion was performed in the same manner as for Sample 5, except that the inside of the cylinder was purged with nitrogen gas and a screw in which a side surface of the screw flight on the first-direction side was formed in a tapered shape was used. In each sample, the amount of antioxidant was set to 0.1 parts by mass.

[Table 1]

| | | | Number average molecular weight in terms of styrene Mn | Amont of MAH modification [wt%] | Sample | | | | | |
|---|---|---|---|---|---|---|---|---|---|---|
| | | | | | 1-A | 2-A | 3-A | 4-A | 5-A | 6-A |
| Resin composition | Base polymer (A) | PP1 | 140,000 | - | 65 | 65 | 65 | 65 | 75 | 75 |
| | Modified polymer (B) | MAH-PP1 | 58,000 | 0.3 | 5 | 5 | 5 | - | - | - |
| | | MAH-PP2 | 41,000 | 0.8 | - | - | - | 5 | - | - |
| | | MAH-PP3 | 15,000 | 1.8 | - | - | - | - | 5 | 5 |
| | Thermoplastic elastomer (C) | SEBS | 150,000 | - | 30 | 30 | 30 | 30 | 20 | 20 |
| Extrusion condition | Purging with nitrogen | | | | Performed | Performed | Not performed | Not performed | Not performed | Performed |
| | Presence or absence of tapered surface in screw | | | | Present | Absent | Present | Absent | Absent | Present |
| Resin composition | Total content of unsaturated carboxylic acid [%] | | | | 0.015 | 0.015 | 0.015 | 0.04 | 0.09 | 0.09 |
| | Percentage of high molecular weight component [%] | | | | 21.4 | 19.5 | 16.2 | 12.9 | 9.3 | 11.4 |
| | Percentage of low molecular weight component [%] | | | | 0.75 | 0.83 | 0.96 | 1.82 | 2.17 | 1.87 |
| Evaluation | Accumulated amount of space charges [%] (40 kV/mm, 90°C) | | | | 10 | 13 | 24 | 46 | 140 | 78 |
| | Rating | | | | A | A | A | B | C | B |
| | Volume resistivity [Ω·cm] (40 kV/mm, 90°C) | | | | $2.2 \times 10^{15}$ | $9.7 \times 10^{15}$ | $5.1 \times 10^{15}$ | $2.1 \times 10^{15}$ | $7.1 \times 10^{14}$ | $1.3 \times 10^{15}$ |
| | Rating | | | | A | A | B | B | C | B |
| | Accumulated amount of space charges [%] (80 kV/mm, 90°C) | | | | 28 | 35 | 70 | 120 | 350 | 256 |
| | Rating | | | | A | B | B | C | C | C |
| | Volume resistivity [Ω·cm] (80 kV/mm, 90°C) | | | | $9.1 \times 10^{15}$ | $3.3 \times 10^{15}$ | $1.4 \times 10^{15}$ | $5.6 \times 10^{14}$ | $1.2 \times 10^{14}$ | $6.4 \times 10^{14}$ |
| | Rating | | | | A | B | B | C | C | C |
| | DC breakdown strength [kV/mm] (90°C) | | | | 280 | 265 | 250 | 180 | 155 | 168 |
| | Rating | | | | A | A | A | B | C | B |

EP 4 663 699 A1

(3) Production of power cable

Next, a conductor is prepared which is formed by twisting a plurality of conductor core wires made of dilute copper alloy having a diameter of 14 mm. After the conductor was prepared, a resin composition for an internal semiconductive layer including an ethylene-ethyl acrylate copolymer, a resin composition for an insulating layer prepared in (2) described above, and a resin composition for an external semiconductive layer including a similar material to the resin composition for the internal semiconductive layer were respectively charged into extruders A to C. The respective extrudates from the extruders A to C were guided to a common head, and the internal semiconductive layer, the insulating layer, and the external semiconductive layer, outwardly from the inside, were simultaneously extruded on the outer circumference of the conductor. Thus, a power cable sample including the conductor, the internal semiconductive layer, the insulating layer, and the external semiconductive layer, from the center toward the outer circumference, was produced. In this embodiment, extrusion was performed continuously and evaluation sample A was cut out from the power cable after 240 hours. For comparison, evaluation sample B was cut out from the power cable immediately after extrusion (after 0 hours). When extruding the resin composition for the insulating layer, the extrusion was performed under the extrusion conditions shown in Table 1.

(4) Evaluation

For evaluation sample A and evaluation sample B cut out from the produced power cable, the molecular weight distribution of the resin composition constituting the insulating layer, the total content of the unsaturated carboxylic acid (maleic acid), space charge characteristics, volume resistivity, and DC breakdown strength were evaluated. The evaluation methods are as follows:

(Molecular Weight Distribution)

As for the molecular weight distribution of the resin composition forming the insulating layer, a number average molecular weight of the base resin was measured by GPC under the following conditions based on a calibration curve prepared using PS as a standard sample. In this example, based on the molecular weight distribution obtained, the ratio of the area of regions having a molecular weight of $1 \times 10^4$ or less to the total area of the entire molecular weight distribution was determined to obtain the percentage of low molecular weight components having a molecular weight of $1 \times 10^4$ or less. Similarly, the ratio of the area of the region having a molecular weight of $6 \times 10^5$ or more to the total area of the entire molecular weight distribution was determined, and the percentage of high molecular weight components having a molecular weight of $6 \times 10^5$ or more was determined.

Apparatus: HLC-8321GPC/HT manufactured by TOSOH CORPORATION
Eluent: 1,2,4-Trichlorobenzene
Temperature: 140°C
Concentration: 1.0 mg/mL
Flow rate: 1.0 mL/min
Note that the calibration curve of PS was prepared based on the results within the molecular weight range of 1,000 or more and 5,500,000.

(Total Content of Unsaturated Carboxylic Acid)

The total content of the unsaturated carboxylic acid (maleic acid) in the resin composition forming the insulating layer was calculated from the spectrum obtained by methyl esterification of the unsaturated carboxylic acid moieties in the resin composition followed by 1H-NMR measurement. Specifically, for the obtained spectrum, the area S1 of the peak derived from the polymer skeleton and the area S2 of the peak derived from unsaturated carboxylic acids were determined, and the ratio of S2 to the sum of S1 and S2 (S2/S1 + S2) was defined as a total content of the unsaturated carboxylic acid.

(Space Charge Characteristics)

The space charge characteristics of the insulating layer were evaluated based on the accumulated amount of space charges in the insulating layer. The accumulated amount of space charges was measured by a direct current integrated charge method. Specifically, a sheet-like sample piece was first taken from the insulating layer of the power cable. Next, this sample piece was connected in series to a capacitor for measurement, and then electric charges were allowed to be accumulated in a capacitor for measurement connected in series with a sheet as a sample, and an amount of charge, which is an integrated value of the current, was evaluated. In this example, a DC electric field of 40 kV/mm or 80 kV/mm was continuously applied to the sample at a temperature of 90°C, and the accumulated amount of space charges at a temperature of 90°C and at a DC electric field of 40 kV/mm and the accumulated amount of space charges at a temperature of 90°C and at a DC electric field of 80 kV/mm were calculated by the following formula based on the amount of charge Q300 after 300 seconds has elapsed and the amount of charge Q0 immediately after the application (0 seconds). A case where the accumulated amount of space charges is 30% or less was evaluated as A (best), and a case where the accumulated amount of space charges is more than 30% and 100% or less was evaluated as B (good), and a case where the accumulated amount of space charges is more than 100% was evaluated as C (bad).

$$\text{Accumulated amount of space charges} = (Q_{300}/Q_0 - 1) \times 100$$

(Volume Resistivity)

The volume resistivity of the insulating layer was measured using a sheet-like sample piece taken from the insulating layer of the power cable similarly to the space charge characteristics. Specifically, the sample piece was immersed in silicone oil at a temperature of 90°C, and a direct current electric field of 40 kV/mm or 80 kV/mm was applied to the sample piece using a flat electrode having a diameter of 25 mm, thereby measuring the volume resistivity. A case where the volume resistivity is $7 \times 10^{15}$ Ω·cm or more was evaluated as A (best), a case where the volume resistivity is $1 \times 10^{15}$ Ω·cm or more and less than $7 \times 10^{15}$ Ω·cm was evaluated as B (good), and a case where the volume resistivity is less than $1 \times 10^{15}$ Ω·cm was evaluated as C (bad).

(DC Breakdown Strength)

The DC breakdown strength of the insulating layer was measured using a sheet-like sample piece taken from the insulating layer of the power cable similarly to the space charge characteristics. Specifically, the test piece was first immersed in silicone oil at a temperature of 90°C, and an applied voltage was increased at a rate of 4 kV/min using a flat plate electrode having a diameter of 25 mm. Specifically, the test piece was first immersed in silicone oil at a temperature of 90°C, and an applied voltage was increased at a rate of 4 kV/min using a flat plate electrode having a diameter of 25 mm. Then, a voltage applied when dielectric breakdown occurred in the test piece was divided by the thickness of the test piece to obtain a DC breakdown strength of the test piece. A case where the DC breakdown strength is 200 kV/mm or more was evaluated as A (best), a case where the DC breakdown strength is 160 kV/mm or more and less than 200 kV/mm was evaluated as B (good), and a case where the DC breakdown strength is less than 160 kV/mm was evaluated as C (bad).

(5) Evaluation results

The results for the evaluation sample A taken 240 hours after extrusion are summarized in Table 1 above, and the results for the evaluation sample B taken immediately after extrusion are summarized in Table 2 below.

[Table 2]

| | | | Number average molecular weight in terms of styrene Mn | Amont of MAH modification [wt%] | Sample | | | | | |
|---|---|---|---|---|---|---|---|---|---|---|
| | | | | | 1-B | 2-B | 3-B | 4-B | 5-B | 6-B |
| Resin composition | Base polymer (A) | PP1 | 140,000 | - | 65 | 65 | 65 | 65 | 75 | 75 |
| | Modified polymer (B) | MAH-PP1 | 58,000 | 0.3 | 5 | 5 | 5 | - | - | - |
| | | MAH-PP2 | 41,000 | 0.8 | - | - | - | 5 | - | - |
| | | MAH-PP3 | 15,000 | 1.8 | - | - | - | - | 5 | 5 |
| | Thermoplastic elastomer (C) | SEBS | 150,000 | - | 30 | 30 | 30 | 30 | 20 | 20 |
| Extrusion condition | Purging with nitrogen | | | | Performed | Performed | Not performed | Not performed | Not performed | Performed |
| | Presence or absence of tapered surface in screw | | | | Present | Absent | Present | Absent | Absent | Present |
| Resin composition | Total content of unsaturated carboxylic acid [%] | | | | 0.015 | 0.015 | 0.015 | 0.04 | 0.09 | 0.09 |
| | Percentage of high molecular weight component [%] | | | | 23.2 | 23.3 | 23.1 | 17.0 | 12.2 | 12.0 |
| | Percentage of low molecular weight component [%] | | | | 0.65 | 0.66 | 0.62 | 1.41 | 1.65 | 1.68 |
| Evaluation | Accumulated amount of space charges [%] (40 kV/mm, 90°C) | | | | 9 | 10 | 12 | 32 | 56 | 53 |
| | Rating | | | | A | A | A | B | B | B |
| | Volume resistivity [$\Omega \cdot$cm] (40 kV/mm, 90°C) | | | | $4.1 \times 10^{16}$ | $4.5 \times 10^{16}$ | $3.9 \times 10^{16}$ | $6.5 \times 10^{15}$ | $3.2 \times 10^{15}$ | $3.6 \times 10^{15}$ |
| | Rating | | | | A | A | A | B | B | B |
| | Accumulated amount of space charges [%] (80 kV/mm, 90°C) | | | | 24 | 21 | 27 | 73 | 156 | 152 |
| | Rating | | | | A | A | A | B | C | C |
| | Volume resistivity [$\Omega \cdot$cm] (80 kV/mm, 90°C) | | | | $2.1 \times 10^{16}$ | $2.4 \times 10^{16}$ | $1.8 \times 10^{16}$ | $1.3 \times 10^{15}$ | $6.6 \times 10^{14}$ | $7.5 \times 10^{14}$ |
| | Rating | | | | A | A | A | B | C | C |
| | DC breakdown strength [kV/mm] (90°C) | | | | 298 | 301 | 289 | 210 | 176 | 182 |
| | Rating | | | | A | A | A | A | B | B |

As shown in Tables 1 and 2, each of samples 1 to 6 showed a lower percentage of high molecular weight components and a higher percentage of low molecular weight components 240 hours after extrusion compared to immediately after extrusion, and thus it was confirmed that molecular weight distribution varied. However, in Samples 1 to 3, the variation in molecular weight distribution was small, and it is found that in the evaluation sample A after 240 hours, the percentage of low molecular weight components can be maintained at less than 1.3% and the percentage of high molecular weight components was maintained at 16% or more. Moreover, the total content of the unsaturated carboxylic acid in the resin composition was 0.0003% or more. As a result, it is found that even 240 hours after extrusion, The results show that the accumulated amount of space charges can be maintained low and a high volume resistivity can be obtained. All the samples were found to have high DC breakdown electric field strength. That is, in Samples 1 to 3, when a long power cable is produced, the variation in insulation in the length direction can be suppressed, and high insulation can be stably achieved.

Comparison between Samples 1-A to 3-A revealed that the percentages of high molecular weight components and low molecular weight components varied due to differences in extrusion conditions, although the materials and compositions used were identical. Specifically, it is confirmed that sample 2-A produced while purging the inside of the cylinder with nitrogen gas can have a higher percentage of high molecular weight components and a lower percentage of low molecular weight components than Sample 3-A produced using a screw flight having a tapered shape. Thus, it is found that when the inside of the cylinder is an inert gas atmosphere, the molecular weight of the polymer component can be prevented from being reduced more easily compared to the case where the retention of the resin composition inside the cylinder is suppressed. Sample 1-A, which employs purging with nitrogen gas and a screw flight having a tapered shape, is found to more reliably suppress variations in molecular weight distribution compared to Samples 2-A and 3-A, which employ either one.

For Sample 4, it was confirmed that the percentage of high molecular weight components was high and the percentage of low molecular weight components was low in Evaluation Sample B immediately after extrusion, while the percentage of high molecular weight components was significantly reduced and the percentage of low molecular weight components was increased in Evaluation Sample A 240 hours after extrusion. In other words, it was found that the molecular weight distribution of the resin composition varied significantly over the extrusion time. This is believed to be due to the accelerated decomposition of the resin component by heat mixing the material without nitrogen purging. In addition, it is believed to be because the use of a screw with a screw flight having a rectangular shape makes it easier for the resin composition to be retained inside the cylinder, and the retained resin components were heated excessively, which accelerates their decomposition. As a result, it was confirmed that Sample 4 had a large accumulated amount of space charges, and also had a low volume resistivity and a low DC breakdown electric field strength.

In Sample 5, MAH-PP3 having a relatively smaller number average molecular weight was used as the modified polymer (B), and the composition was such that the percentage of low molecular weight components in the resin composition was high to begin with. Therefore, it was confirmed that the percentage of high molecular weight components was relatively lower and the percentage of low molecular weight components was relatively higher in Evaluated Sample B immediately after extrusion. Moreover, Evaluation Sample B did not employ a nitrogen purge or a screw having a screw flight with a tapered shape. Therefore, compared to Evaluation Sample B immediately after extrusion, it was confirmed that Evaluation Sample A 240 hours after extrusion showed an even lower percentage of high molecular weight components and an even higher percentage of low molecular weight components. As a result, it was confirmed that an accumulated amount of space charges was large, and a volume resistivity and a DC breakdown electric field strength were low.

In Sample 6, decomposition of the resin components during extrusion and variations in molecular weight distribution due to retention of the resin composition can be suppressed by purging with nitrogen gas and employing a screw flight with a tapered shape. However, since Sample 6 has the same composition as that of Sample 5, the percentage of high molecular weight components in the resin composition is originally low and the percentage of low molecular weight component is originally high. Therefore, it was confirmed that the accumulated amount of space charges was large, and the volume resistivity and DC breakdown electric field strength were low.

Observation of the phase structure of the resin composition using a transmission electron microscope for Samples 1 to 6 confirmed that a sea-island structure was formed in which the thermoplastic elastomer (C) was finely dispersed as an island phase in the sea phase where the base polymer (A) and the modified polymer (B) were compatible with each other.

As described above, in the resin composition, by using at least a base polymer (A) having propylene units and a modified polymer (B) having propylene units, and by ensuring that the total content of the unsaturated carboxylic acid and the ratio of high molecular weight components and low molecular weight components in the resin composition satisfy specified requirements, it is possible to suppress the accumulation of space charges and improve the volume resistivity and DC breakdown electric field strength even in high temperature environments. In other words, it is confirmed that in the resin composition, high insulation can be stably obtained. Accordingly, the insulating layer can have a high withstand voltage even in high temperature environments, enabling more stable DC transmission through the power cable.

<Supplementary Descriptions>

Hereinafter, supplementary descriptions of the aspects of the present disclosure will be given.

(Supplementary Description 1)

A resin composition, including:

a base polymer (A) having propylene units; and
a modified polymer (B) having propylene units and modified with unsaturated carboxylic acid,

wherein a total content of the unsaturated carboxylic acid derived from the modified polymer (B) is 0.0003% or more; and
when a molecular weight distribution is measured, a percentage of components having a molecular weight of $1 \times 10^4$ or less is less than 1.3%, and a percentage of components having a molecular weight of $6 \times 10^5$ or more is 16% or more.

(Supplementary Description 2)

A power cable, including:

a conductor; and
an insulating layer covering a circumference of the conductor and formed of a resin composition,

wherein the resin composition contains

a base polymer (A) having propylene units, and
a modified polymer (B) having propylene units and modified with unsaturated carboxylic acid,

a total content of the unsaturated carboxylic acid derived from the modified polymer (B) contained in the resin composition is 0.0003% or more, and
when a molecular weight distribution of the resin composition is measured, a percentage of components having a molecular weight of $1 \times 10^4$ or less is less than 1.3%, and a percentage of components having a molecular weight of $6 \times 10^5$ or more is 16% or more.

(Supplementary Description 3)

In supplementary description 2,
it is preferable that the resin composition includes 90 parts by mass or more and 99 parts by mass or less of the base polymer (A) and 1 part by mass or more and 10 parts by mass or less of the modified polymer (B), taking a total content of the base polymer (A) and the modified polymer (B) as 100 parts by mass.

(Supplementary Description 4)

In supplementary description 2,
it is preferable that the resin composition further includes a thermoplastic elastomer (C) containing styrene units, and the resin composition includes 55 parts by mass or more and 90 parts by mass or less of the base polymer (A), 1 part by mass or more and 10 parts by mass or less of the modified polymer (B), and 10 parts by mass or more and 45 parts by mass or less of the thermoplastic elastomer (C), taking a total content of the base polymer (A), the modified polymer (B), and the thermoplastic elastomer (C) as 100 parts by mass.

(Supplementary Description 5)

In any one of supplementary descriptions 2 to 4,
it is preferable that a number average molecular weight of the modified polymer (B) is 20000 or more.

(Supplementary Description 6)

In any one of supplementary descriptions 2 to 5,
it is preferable that a number average molecular weight of the base polymer (A) is 80000 or more.

(Supplementary Description 7)

In any one of supplementary descriptions 2 to 6,
melt flow rate of the base polymer (A) is 0.1 g/10 min or more and 5.0 g/10 min or less.

(Supplementary Description 8)

In any one of supplementary descriptions 2 to 7,
melt flow rate of the modified polymer (B) is 0.1 g/10 min or more and 500 g/10 min or less.

(Supplementary Description 9)

In supplementary description 4,
melt flow rate of the thermoplastic elastomer (C) is 0.1 g/10 min or more and 5.0 g/10 min or less.

(Supplementary Description 10)

A method of producing a power cable including a conductor, and an insulating layer covering a circumference of the conductor and formed of a resin composition, including:

a preparation step in which the resin composition is prepared; and
an insulating layer formation step in which the resin composition is extruded to cover the circumference of the conductor, thereby forming the insulating layer;

wherein, in the preparation step, a base polymer (A) having propylene units and a modified polymer (B) having propylene units and modified with an unsaturated carboxylic acid are added to the resin composition in an amount yielding a total content of the unsaturated carboxylic acid derived from the modified polymer (B) of 0.0003% or more, and the mixture is heated and mixed in an inert gas atmosphere.

(Supplementary Description 11)

In supplementary description 10,
it is preferable that in the preparation step, the resin composition is prepared using an extruder including a cylinder having a cylindrical shape, a screw that is inserted from a first direction of the cylinder and rotatably arranged, a discharge part that is attached to a second direction of the cylinder and provided with a pore part for discharging the resin composition, and an atmosphere control part for controlling an inside of the cylinder to be an inert gas atmosphere.

(Supplementary Description 12)

In supplementary description 11,

it is preferable that the screw includes a screw body part, and a screw flight arranged helically on a surface of the screw body part,
wherein the side surface of the screw flight on the first-direction side is formed in a tapered shape.

[Reference Signs List]

10      Power cable
110     Conductor
120     Internal semiconductive layer
130     Insulating layer

140     External semiconductive layer
150     Shielding layer
160     Sheath
200     Extruder
210     Cylinder
220     Hopper
230     Screw
231     Screw body part
232     Screw flight
240     Rotary drive mechanism
250     Discharge part
251     Pore part
260     Atmosphere control part
270     Retention suppression member
271     Tapered pore part

**Claims**

1.  A resin composition, comprising:

    a base polymer (A) having propylene units; and
    a modified polymer (B) having propylene units and modified with unsaturated carboxylic acid,
    wherein a total content of the unsaturated carboxylic acid derived from the modified polymer (B) is 0.0003% or more; and
    when a molecular weight distribution is measured, a percentage of components having a molecular weight of $1 \times 10^4$ or less is less than 1.3%, and a percentage of components having a molecular weight of $6 \times 10^5$ or more is 16% or more.

2.  A power cable, comprising:

    a conductor; and
    an insulating layer covering a circumference of the conductor and formed of a resin composition,
    wherein the resin composition contains

        a base polymer (A) having propylene units, and
        a modified polymer (B) having propylene units and modified with unsaturated carboxylic acid,

    a total content of the unsaturated carboxylic acid derived from the modified polymer (B) contained in the resin composition is 0.0003% or more, and
    when a molecular weight distribution of the resin composition is measured, a percentage of components having a molecular weight of $1 \times 10^4$ or less is less than 1.3%, and a percentage of components having a molecular weight of $6 \times 10^5$ or more is 16% or more.

3.  The power cable according to claim 2,
    wherein the resin composition includes 90 parts by mass or more and 99 parts by mass or less of the base polymer (A) and 1 part by mass or more and 10 parts by mass or less of the modified polymer (B), taking a total content of the base polymer (A) and the modified polymer (B) as 100 parts by mass.

4.  The power cable according to claim 2,
    wherein the resin composition further comprises a thermoplastic elastomer (C) containing styrene units, and the resin composition comprises 55 parts by mass or more and 90 parts by mass or less of the base polymer (A), 1 part by mass or more and 10 parts by mass or less of the modified polymer (B), and 10 parts by mass or more and 45 parts by mass or less of the thermoplastic elastomer (C), taking a total content of the base polymer (A), the modified polymer (B), and the thermoplastic elastomer (C) as 100 parts by mass.

5.  The power cable according to claim 4,
    wherein the thermoplastic elastomer (C) is a styrene-based elastomer having styrene units.

6. The power cable according to any one of claims 2 to 5,
   wherein a number average molecular weight of the modified polymer (B) is 20000 or more.

7. The power cable according to any one of claims 2 to 6,
   wherein a number average molecular weight of the base polymer (A) is 80000 or more.

8. A method of producing a power cable including a conductor, and an insulating layer covering a circumference of the conductor and formed of a resin composition, comprising:

   a preparation step in which the resin composition is prepared; and
   an insulating layer formation step in which the resin composition is extruded to cover the circumference of the conductor, thereby forming the insulating layer;

   wherein, in the preparation step, a base polymer (A) having propylene units and a modified polymer (B) having propylene units and modified with an unsaturated carboxylic acid are added to the resin composition in an amount yielding a total content of the unsaturated carboxylic acid derived from the modified polymer (B) of 0.0003% or more, and the mixture is heated and mixed in an inert gas atmosphere.

9. The method of producing a power cable according to claim 8,
   wherein in the preparation step, the resin composition is prepared using an extruder including a cylinder having a cylindrical shape, a screw that is inserted from a first direction of the cylinder and rotatably arranged, a discharge part that is attached to a second direction of the cylinder and provided with a pore part for discharging the resin composition, and an atmosphere control part for controlling an inside of the cylinder to be an inert gas atmosphere.

[Fig. 1]

160
150
140
130
120
110

10

[Fig. 2]

220    260                    250

231 232    230          210

240

200

[Fig. 3]

[Fig. 4]

[Fig. 5]

```
          ┌──────────────┐
          │    Start     │
          └──────┬───────┘
                 │
                 ▼
  ┌─────────────────────────────────────┐
  │  Resin composition preparation step │──── S100
  └──────────────────┬──────────────────┘
                     │
                     ▼
  ┌─────────────────────────────────────┐
  │     Conductor preparation step      │──── S200
  └──────────────────┬──────────────────┘
                     │
                     ▼
  ┌─────────────────────────────────────┐
  │      Cable core formation step      │──── S300
  └──────────────────┬──────────────────┘
                     │
                     ▼
  ┌─────────────────────────────────────┐
  │   Shielding layer formation step    │──── S400
  └──────────────────┬──────────────────┘
                     │
                     ▼
  ┌─────────────────────────────────────┐
  │       Sheath formation step         │──── S500
  └──────────────────┬──────────────────┘
                     │
                     ▼
          ┌──────────────┐
          │     End      │
          └──────────────┘
```

## INTERNATIONAL SEARCH REPORT

| | International application No. |
|---|---|
| | **PCT/JP2023/004433** |

| A. | CLASSIFICATION OF SUBJECT MATTER |
|---|---|

*C08L 23/12*(2006.01)i; *C08L 23/26*(2006.01)i; *H01B 9/00*(2006.01)i; *C08J 7/04*(2020.01)i
FI: C08L23/12; C08L23/26; C08J7/04 Z CES; H01B9/00 A

According to International Patent Classification (IPC) or to both national classification and IPC

| B. | FIELDS SEARCHED |
|---|---|

Minimum documentation searched (classification system followed by classification symbols)

C08L1/00-101/14; C08K3/00-13/08; H01B9/00; C08J7/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 07-025943 A (MITSUBISHI PETROCHEM CO., LTD.) 27 January 1995 (1995-01-27) entire text | 1-9 |
| A | JP 2010-195853 A (TORAY INDUSTRIES, INC.) 09 September 2010 (2010-09-09) entire text | 1-9 |
| A | JP 2020-152866 A (THE FURUKAWA ELECTRIC CO., LTD.) 24 September 2020 (2020-09-24) entire text | 1-9 |
| A | US 2014/0349110 A1 (BOREALIS AG) 27 November 2014 (2014-11-27) entire text | 1-9 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/004433**

| Patent document cited in search report | | | Publication date (day/month/year) | Patent family member(s) | | | Publication date (day/month/year) |
|---|---|---|---|---|---|---|---|
| JP | 07-025943 | A | 27 January 1995 | (Family: none) | | | |
| JP | 2010-195853 | A | 09 September 2010 | (Family: none) | | | |
| JP | 2020-152866 | A | 24 September 2020 | (Family: none) | | | |
| US | 2014/0349110 | A1 | 27 November 2014 | WO | 2013/083602 | A1 | |
| | | | | EP | 2602287 | A1 | |
| | | | | MX | 2014006650 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11086634 A